# EUROPEAN PATENT APPLICATION

(11) **EP 1 233 252 A1**
(43) Date of publication of application: **21.08.2002**
(21) Application number: 02003663.8
(22) Date of filing: 18.02.2002
(51) Int. Cl.: G01D 13/28

(54) **Analog instrument pointer and production method**

(30) Priority: 20.02.2001 IT TO010146
(71) Applicant: MAGNETI MARELLI SISTEMI ELETTRONICI S.p.A., 10138 Torino (IT)
(72) Inventor: Masala, Luca, 28100 Novara (IT)
(74) Representative: Bongiovanni, Simone (IT)

(57) **Abstract**

An analog instrument pointer, in particular for an automotive instrument, having a pointer body (2) molded in one piece from transparent material, and a cup-shaped cap (3) co-molded on to the pointer body (2) and made of material impervious to light.

## Description

The present invention relates to an analog instrument pointer, in particular for an automotive analog instrument, and to a method of producing an analog instrument pointer, in particular for an automotive instrument.

Pointers for automotive analog instruments (such as engine speed, level, temperature, and speed indicators, etc.) are known in which a number of component parts are assembled, for example, using click-on connecting means. Known methods of producing known pointers, however, are complicated, expensive and relatively time-consuming.

It is an object of the present invention to provide an analog instrument pointer which is cheap and easy to produce.

According to the present invention, there is provided an analog instrument pointer as described in Claim 1. The present invention also relates to a method of producing an analog instrument pointer, in particular for an automotive instrument, as claimed in Claim 12.

A non-limiting embodiment of the present invention will be described by way of example with reference to the accompanying drawings, in which:
Figure 1 shows an exploded view of an instrument pointer in accordance with the teachings of the present invention;
Figure 2 shows a top view in perspective of the pointer according to the present invention;
Figure 3 shows a side view of a first member of the pointer according to the present invention;
Figure 4 shows a longitudinal section of the first member in Figure 3;
Figure 5 shows a rear view in perspective of the Figure 3 member;
Figure 6 shows a view in perspective of a second member of the pointer according to the present invention;
Figure 7 shows a top plan view of the second member.

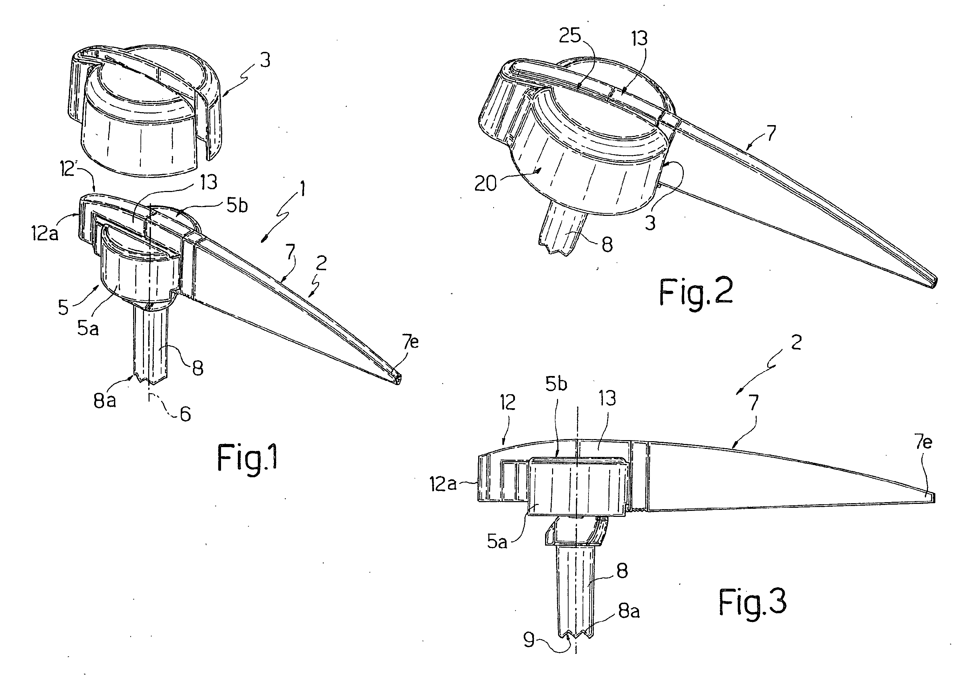

Number 1 in Figure 1 indicates as a whole an analog instrument pointer, which may conveniently be used on a vehicle, e.g. a car or industrial vehicle. Pointer 1 is made entirely of plastic material, and comprises a pointer body 2, and a cap 3 co-molded on to pointer body 2.

More specifically, pointer body 2 is molded in one piece from plastic material, and comprises a cylindrical tubular central portion 5; a straight elongated element 7 extending radially from cylindrical tubular central portion 5; and a cylindrical pin 8 extending axially from tubular central portion 5. More specifically, central portion 5 comprises a cylindrical tubular lateral wall 5a coaxial with an axis 6; and a substantially flat, circular top wall 5b perpendicular to axis 6.

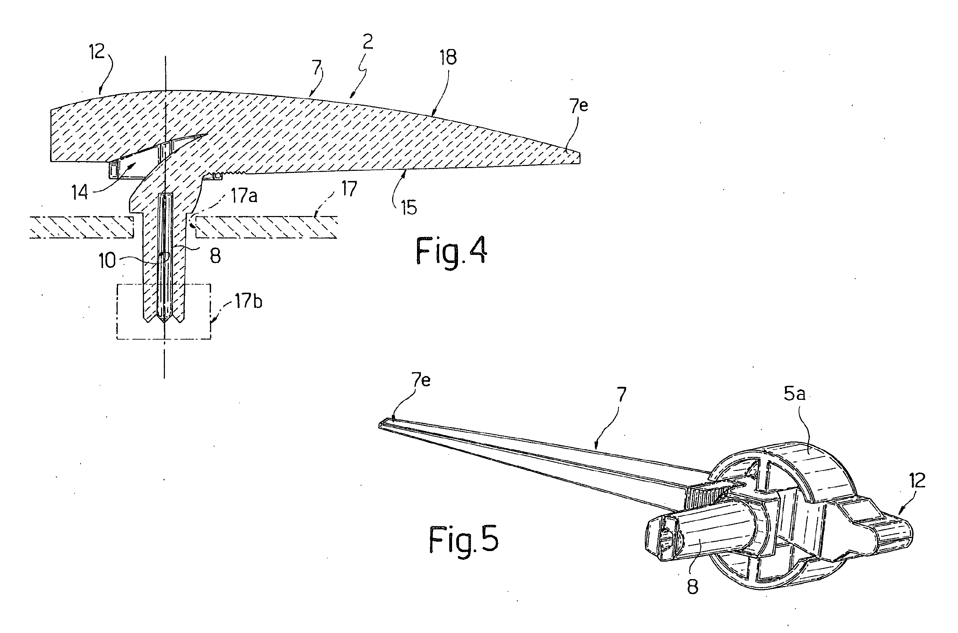

Pin 8 has a free end 8a on which are formed a number of flat surfaces 9 (Figure 3) inclined with respect to one another so that, in longitudinal section, free end 8a of pin 8 has a serrated profile. Pin 8 also has a central hole 10 (Figure 4) coaxial with axis 6 and extending substantially the whole length of pin 8; and pointer body 2 also comprises a short straight appendix 12 extending radially from central portion 5, on the opposite side to elongated element 7, and having a rounded end portion 12a.

Elongated element 7 and appendix 12 are joined by a parallelepiped portion 13 extending diametrically across flat circular top wall 5b.

As shown in the Figure 4 longitudinal section of pointer body 2, an outwardly-open groove 14 with a substantially V-shaped cross section is formed close to pin 8, where elongated element 7 and appendix 12 are joined, and has, along one side, a number of refracting faces forming prisms.

Straight elongated element 7 tapers towards an end portion 7e, and has a substantially triangular longitudinal section defined by a straight minor side 15, which is positioned, in use, facing the dial 17 (Figure 4) of the analog instrument (e.g. engine speed, level, temperature, speed indicator, etc.) to which pointer 1 is fitted; and by a slightly curved major side 18 facing, in use, outwards of the instrument.

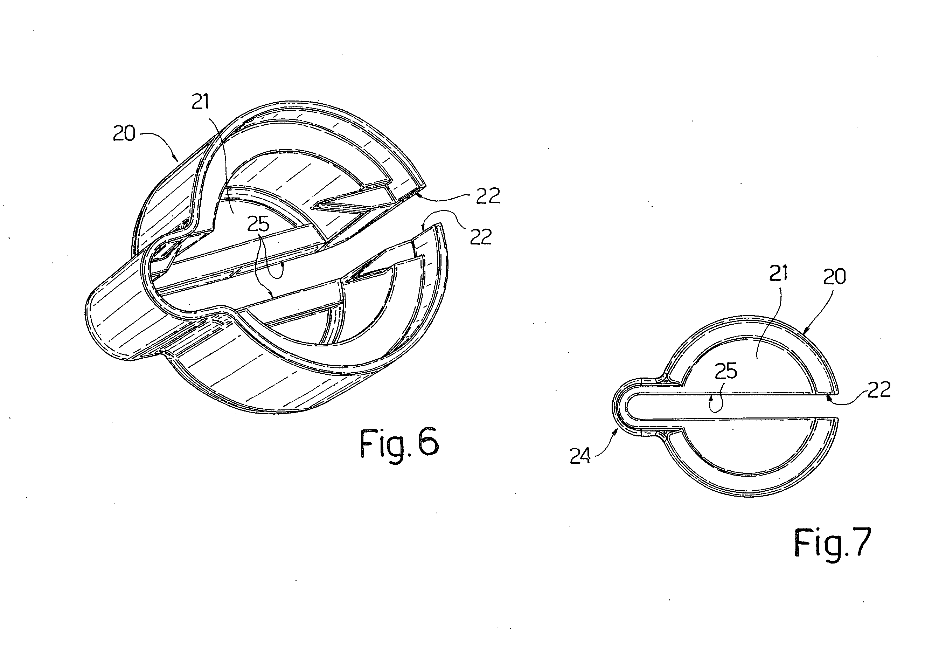

Cap 3 (Figures 6 and 7) is molded in one piece from plastic material impervious to light, and is substantially cup-shaped. More specifically, cap 3 comprises a cylindrical tubular lateral wall 20, and a flat circular end wall 21 formed in one piece with lateral wall 20; and cylindrical tubular lateral wall 20 comprises a rectangular opening 22 extending the full height of wall 20, and an appendix 24 extending radially from wall 20 on the opposite side to opening 22.

Opening 22 also extends across wall 21 to form a diametrical slot 25 terminating inside appendix 24.

Pointer body 2 is molded in one piece from transparent plastic material, such as transparent polycarbonate, though other materials may obviously be used; and cap 3 is molded from plastic material impervious to light, such as ABS or polypropylene, and is then co-molded on to central portion 5. More specifically, tubular lateral wall 20 of cap 3 mates hermetically with cylindrical tubular lateral wall 5a, and end wall 21 mates hermetically with flat circular wall 5b, so that parallelepiped portion 13 engages slot 25, and elongated element 7 engages opening 22 and projects from cap 3.

Pointer 1 is then fitted (in known manner) to a known instrument, e.g. an engine speed indicator. Pin 8 is inserted through a hole 17a in dial 17 of the instrument, and connected (in known manner) to the movable part 17b (shown schematically) of the instrument; and a light source (e.g. a LED not shown) supplies pin 8 with a light beam so that the whole of pointer body 2 is illuminated, while the part of the pointer body fitted with cap 3 is blacked out.

The advantages of the pointer according to the present invention will be clear from the foregoing description. In particular, it comprises only two component parts (pointer body 2 and cap 3) which are simply co-molded to each other.

Moreover, each component part is formed in one piece, so that the pointer according to the present invention is quick and easy to produce and extremely strong.

Clearly, changes may be made to the instrument pointer and method as described herein without, however, departing from the scope of the present invention.

## Claims

1. A pointer for an analog instrument, in particular an automotive instrument, comprising a pointer body (2), and a cap (3) carried by the pointer body (2) ;
**characterized in that** said pointer body (2) is molded in one piece from transparent material, in particular plastic material; and the cap is formed in one piece from material impervious to light, and is co-molded on to the pointer body (2).

2. A pointer as claimed in Claim 1, **characterized in that** the pointer body (2) comprises a cylindrical central portion (5); a straight elongated element (7) extending radially from the central portion (5); and a cylindrical pin (8) extending axially from the central portion (5).

3. A pointer as claimed in Claim 2, **characterized in that** said central portion comprises a cylindrical tubular lateral wall (5a) coaxial with an axis (6); and a flat circular top wall (5b) perpendicular to the axis (6).

4. A pointer as claimed in Claim 2 or 3, **characterized in that** said pin (8) has a free end (8a) on which are formed a number of flat surfaces (9) inclined with respect to one another so that, in longitudinal section, the free end (8a) has a serrated profile.

5. A pointer as claimed in Claim 2, **characterized by** comprising a straight appendix (12) extending radially from the central portion (5), on the opposite side to the elongated element (7).

6. A pointer as claimed in Claim 5, **characterized in that** said straight appendix (12) has a rounded end portion (12a).

7. A pointer as claimed in Claim 5 or 6, **characterized in that** said elongated element (7) and said straight appendix (12) are joined by a parallelepiped portion (13) extending diametrically across the circular top wall (5b) of said central portion (5).

8. A pointer as claimed in Claim 5 or 6, **characterized in that** an outwardly-open groove (14) with a substantially V-shaped cross section is formed close to the pin (8), where the elongated element (7) and the straight appendix (12) are joined; said groove (14) having, along one side, a number of refracting faces forming prisms.

9. A pointer as claimed in any one of the foregoing Claims, **characterized in that** said cap (3) is substantially cup-shaped, and comprises a cylindrical tubular lateral wall (20), and a flat circular end wall (21) formed in one piece with the lateral wall (20); the lateral wall (20) having an opening (22) through which said elongated element (7) extends.

10. A pointer as claimed in Claim 9, **characterized in that** said opening also extends diametrically across the end wall (21) to form a slot (25) engaged by an elongated portion (13) integral with said elongated element (7).

11. A pointer as claimed in Claim 10, **characterized in that** said lateral wall (20) comprises an appendix (24) extending radially from the lateral wall (20) and on the opposite side to said opening (22).

12. A method of producing a pointer for an analog instrument, in particular an automotive instrument, **characterized by** comprising the steps of:
- molding a pointer body (2) in one piece from transparent material, in particular plastic material;
- molding a cap in one piece from material impervious to light; and
- co-molding said cap to said pointer body (2).
